# EUROPÄISCHE PATENTSCHRIFT

(11) **EP 1 686 670 B1**
(45) Veröffentlichungstag und Bekanntmachung des Hinweises auf die Patenterteilung: **06.08.2008**
(21) Anmeldenummer: 05001750.8
(22) Anmeldetag: 28.01.2005
(51) Int. Cl.: H02G 15/013, F16J 15/46, F16L 5/02, F16L 7/02, B66F 3/35

(54) **Wiederverwendbare Abdicht-, Hebe- und/oder Sicherungsvorrichtung**
Reusable sealing, lifting and/or safety device
Dispositif réutilisable d'étanchéité, de levage et/ou de sécurité

(43) Veröffentlichungstag der Anmeldung: 02.08.2006
(73) Patentinhaber: Fibre Optics CT GmbH, Consulting & Testing, 70437 Stuttgart (DE)
(72) Erfinder: Wolf, Roland, 70437 Stuttgart (DE)
(74) Vertreter: Jeck, Anton

(56) Entgegenhaltungen:
- WO-A-92/19034
- DE-A1- 4 105 625
- DE-U1- 9 302 864
- US-A- 4 459 714
- US-A- 6 015 471

## Beschreibung

Die Erfindung betrifft eine Vorrichtung zum Abdichten von Zwischenräumen, Anheben oder Sichern von Werkstücken gemäß dem Oberbegriff des Anspruchs 1.

In der erst am 31.03.2005 als DE-A-103 41 005 veröffentlichten Patentanmeldung DE 41 005.8 ist der Einsatz von Abdichtelementen zum Verschließen der Zwischenräume bei belegten Kabelschutzrohren oder Kabelverbindungs- und/oder Aufteilmuffen in Femmeldeanlagen vorgeschlagen worden.

Das bekannteste Kabelkanal-Abdichtelement gemäß dem Oberbegriff des Auspruchs 1 ist in der DE 41 056 25 C2 und DE 692 20 786T2 beschrieben. Die Abdichtung wird hier aus einem Kunststofflaminat mit Metalleinlage realisiert, welches durch Luftdruck von ca. 300 KPa gefüllt und zu einem Dichtkörper geformt wird. Nachteilig bei diesem Abdichtelement ist, dass dieses bei der Montage der Länge nach um das / die Kabel gewickelt werden muss. Zusätzlich kommt es auf Grund der Steifigkeit des Abdichtelements beim Abdichten eines Kabelkanalrohrs mit mehr als 2 Kabeln unterschiedlicher, kleiner Durchmesser nach Druckbeanspruchungen zur Faltenbildung, mit der Folge, dass das Abdichtelement durch Druck-Spannungs-Verformung bei Alterung undicht werden kann.

Ein weiterer großer Nachteil ist, dass das Abdichtelement an seiner mit dem Kabelschutzrohr in Kontakt stehenden Außenfläche und mit seiner Innenfläche mit den im Kabelschutzrohr eingelegten Kabeln verklebt und somit einen erheblichen Arbeitsaufwand beim Auswechseln der Abdichtelemente z.B. bei neuer Kabelbelegung verursacht. Der größte Nachteil ist jedoch, dass das Abdichtelement weder wiederverwendbar ist, noch zu einem späteren Zeitpunkt nachbefüllt werden kann, da das Einfüllventil nach Erstbefüllung beim Herausziehen automatisch die Sonde abdichtet, wodurch die Wirtschaftlichkeit des Systems sehr beeinträchtigt wird.

Zwischenräume zwischen Trennwänden werden üblicherweise mit Isoliermatten abgedichtet; zum Befestigen von Maschinen, Platten, Paletten etc. werden üblicherweise Spanngurte und Keile verwendet. Nachteilig bei diesen Systemen ist, dass sie nur mit großem Aufwand montiert und demontiert werden können.

Die Aufgabe der Erfindung besteht darin, eine wiederverwendbare Vorrichtung gemäß der im Oberbegriff des Anspruchs 1 genannten Art zu schaffen, die universell in einem breiten Anwendungsspektrum einsetzbar ist, die ohne fremde Hilfe schnell und zuverlässig montiert werden kann, auch nach Alterung noch zuverlässig abdichtet und für einen wirtschaftlichen Einsatz mindestens vier Mal wieder verwendbar ist.

Die vorliegende Erfindung kann sowohl zum Abdichten von mit Kabeln durchzogenen Kabelkanalrohrzügen, zum Abdichten von Zwischenräumen bei Trennwänden, als Hebevorrichtung bei Montagen (z.B. im Fensterbau) und zur Sicherung von Maschinen, Platten usw. während des Transports oder der Lagerung eingesetzt werden.
Darüber hinaus kann die vorliegende Erfindung zum Verpressen von Druckadaptern zwischen Kabelhülle/ Kabelschutzrohr und Druckluft-Einblaseinrichtung wie sie beim Kalibrieren und der Dichtigkeitskontrolle von Kabelschutzrohren oder beim Einblasen von Kabeln in Kabelschutzrohre eingesetzt werden, dienen.
Diese Aufgabe wird mit den Merkmalen des Anspruchs 1 gelöst:
Die vorteilhaften endgültigen, dem jeweiligen Anwendungsbereich entsprechenden Modifikationen des vorgenannten Grundbauteils zeigen die nachfolgenden Beschreibungen.

Bei Verwendung als Abdichtvorrichtung zum gas- und wasserdruckdichten Verschließen von mit Kabeln und/ oder Rohren belegten Kabelschutzrohren enthält das Flachschlauchkissen vorzugsweise auf der Innen- und Außenfläche zusätzlich ein Dichtband um eine völlige Abdichtung zum Kabelschutzrohr und Kabel etc. zu erzielen.
Gegebenenfalls sind auch die zu umschließenden Kabel und/oder Rohre bauseitig mit einem nicht dauerhaft verklebenden Dichtband zu umschliessen. Das Flachschlauchkissen wird für eine gleichmäßige Druckverteilung in einer oder einer halben Lage kreisförmig an der Innenseite des Kabelschutzrohrs eingelegt. Die Befüllung des Flachschlauchkissens erfolgt über ein metallenes Ventil, welches mit einer, in das Flachschlauchkissen eingeschweißten Verlängerung verbunden ist.
Die gleichmässige Druckbefüllung wird mittels eines perforierten Druckschlauchs der sich im Inneren des Flachschlauchkissens befindet und der mit der Ventilverlängerung verbunden ist, erzielt.

Beim Abdichten von Kabelschutzrohren die mit mehr als einem Kabel und/ oder Kabelschutzrohr belegt sind, wird im Bereich der Stellen, wo sich die Kabel und/ oder Kabelschutzrohre berühren, ein Dichtband fixiert oder die Kabel oder Kabelschutzrohre mit Dichtband umwickelt und ggf. die Zwickel mit Dichtbandabschnitten oder mit Abdichtschnüren usw. aufgefüllt.

Beim Aufpumpen des Flachschlauchkissens mit Luft oder einer Flüssigkeit werden die nicht dauerhaft miteinander verklebenden Dichtungsbänder und die Füllelemente in die Zwischenräume gepresst und das Kabelkanalrohr so verschlossen, dass eine Gas-und Wasserdruckdichtigkeit von 0,5 bar erzielt wird. Die Demontage der wieder verwendbaren Vorrichtung ist durch Ablassen der Füllung über das Ventil einfach möglich.

Zum Abdichten von Zwischenräumen an Trennwänden wird das Flachschlauchkissen in Längsrichtung, vertikal und/oder horizontal unter oder zwischen die Trennwände gelegt. Das Abdichten der Zwischenräume wird je nach Anwendungsbereich durch Aufpumpen des Flachschlauchkissens mit Luft oder einer Flüssigkeit erzielt.

Zum Ausrichten oder Justieren von Werkstücken wird das Flachschlauchkissen in Längsrichtung unter das betreffende Werkstück gelegt. Durch Erhöhen oder Vermindern des Drucks kann das Werkstück zur Montage exakt ausgerichtet werden.

Bei Verwendung zur Sicherung von Werkstücken, Maschinen etc. während des Transports, wird das Flachschlauchkissen lose in horizontaler und/ oder vertikaler Richtung zwischen die Gegenstände eingelegt und mit einer sich am oberen Ende des Flachschlauchkissens befindlichen Öse fixiert. Durch Aufpumpen mit Luft oder einer Flüssigkeit wird das Verrutschen oder Verschieben der Gegenstände verhindert.

Die Erfindung wird an Hand von Ausführungsbeispielen näher erläutert.

Es zeigen:
- Fig. 1: eine perspektivische Ansicht eines in Längsrichtung aufgeschnittenen Flachschlauchkissens gemäß der Erfindung.
- Fig. 2: eine perspektivische Ansicht einer der Fig. 1 ähnlichen Vorrichtung, die zur Verwendung als Sicherungsvorrichtung zusätzlich eine Öse zur Befestigung und je nach Anwendungsfall ein zusätzliches Druckluftventil an der Längsseite enthält.
- Fig. 3: eine perspektivische Ansicht einer der Fig. 1 ähnlichen Vorrichtung, die zur Verwendung als Abdichtvorrichtung auf der/den Oberflächen mit einem Abdichtband versehen ist.
- Fig. 4 a: einen Querschnitt der in Fig. 1 und 3 gezeigten Vorrichtung, die zum Abdichten von Zwischenräumen von Kabel(n) und Kabelkanalrohr mit mehr als einem Kabel/ Rohr je Kabelkanalrohr in einer Lage kreisfömig angeordnet ist

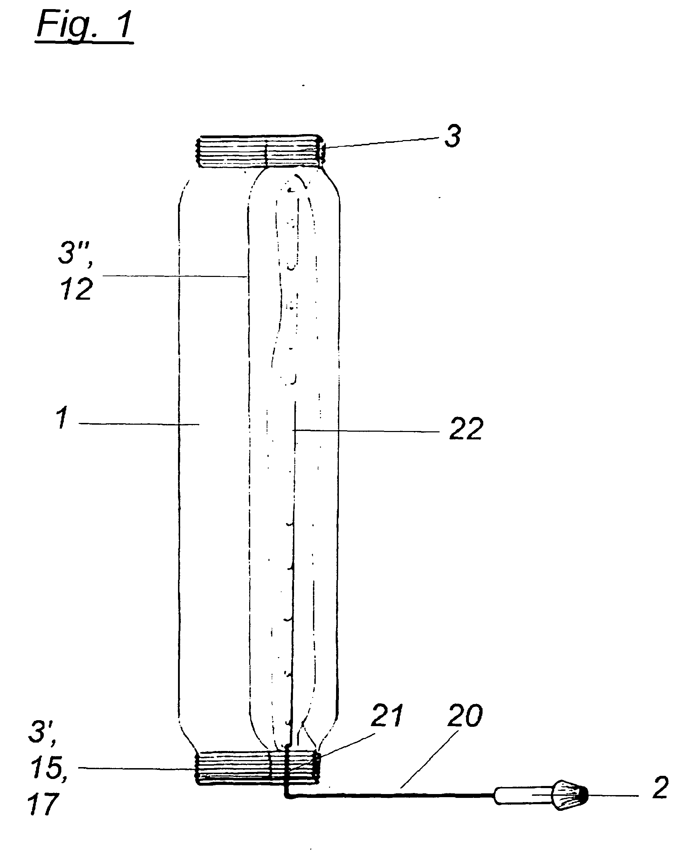

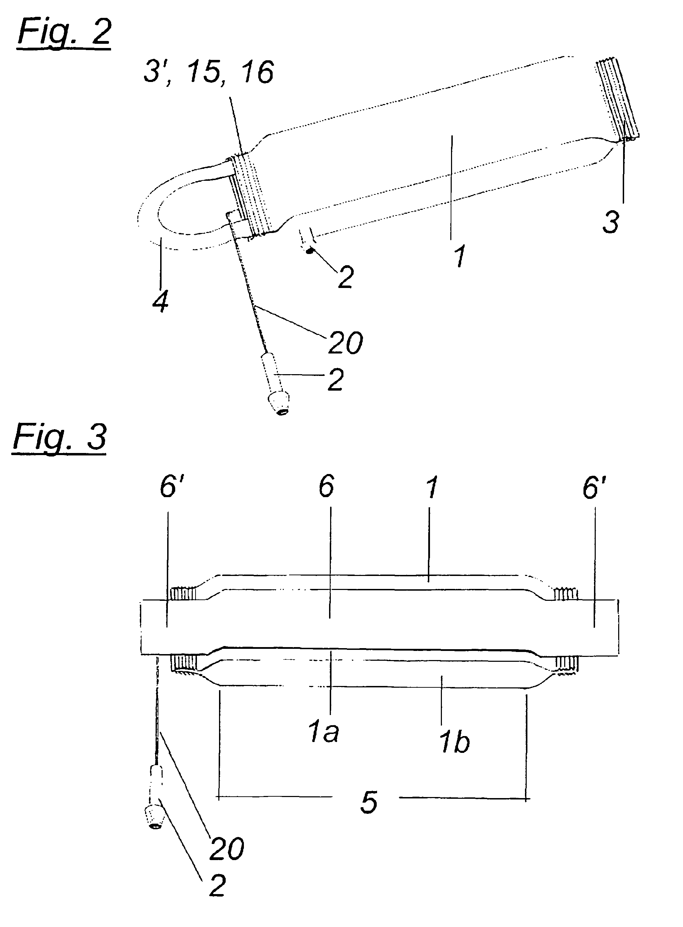

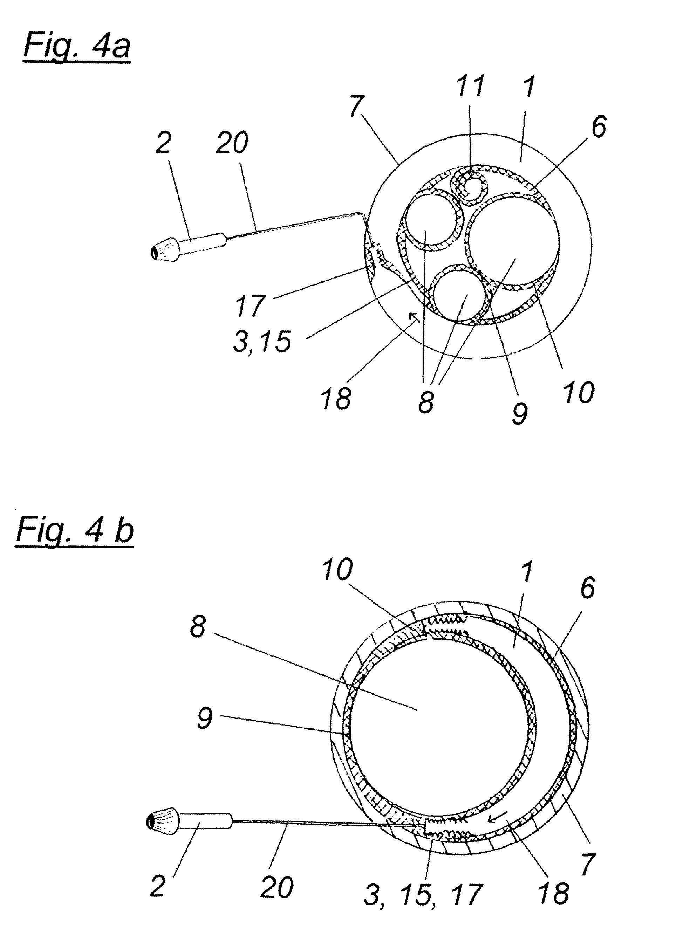

- Fig. 4 b: einen Querschnitt der in Fig. 1 und 3 gezeigten Vorrichtung, die zum Abdichten von Zwischenräumen von Kabel(n) und Kabelkanalrohr, bei Kabel/Rohren mit großem Außendurchmesser kreisförmig im Rohr eingelegt ist

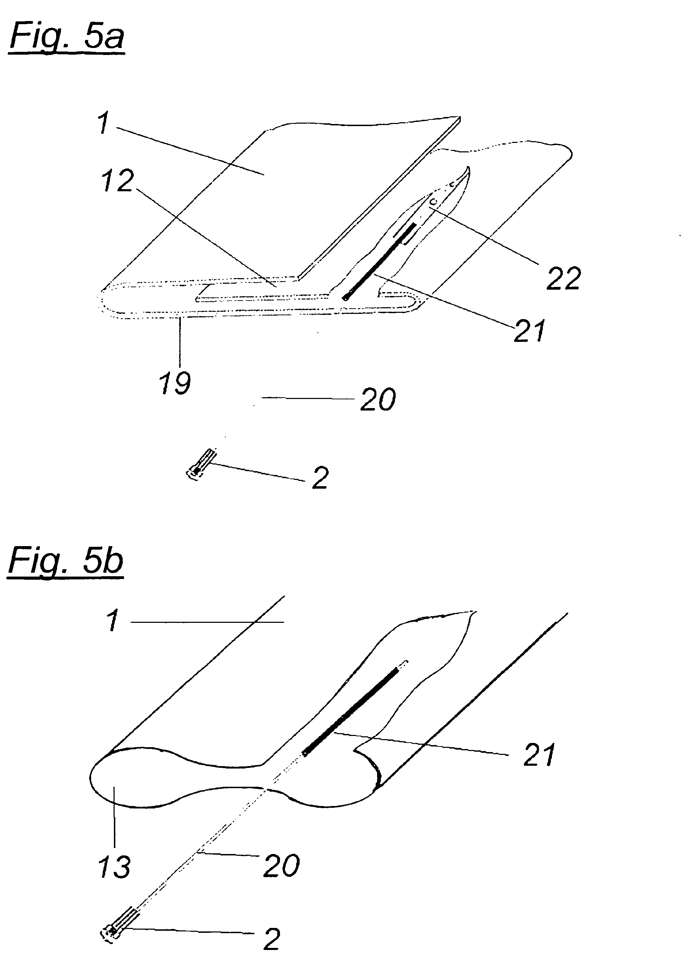

- Fig. 5 a: eine perspektivische Ansicht des aufgeschnittenen Endteils des in den Figuren 1 bis 4 gezeigten Flachschlauchkissens, hergestellt aus einem gefalteten Band einer Verbundfolie
- Fig. 5 b: eine perspektivische Ansicht des aufgeschnittenen Endteils der Fig. 5a, wobei das Flachschlauchkissen aus einem Endlosschlauch hergestellt wurde

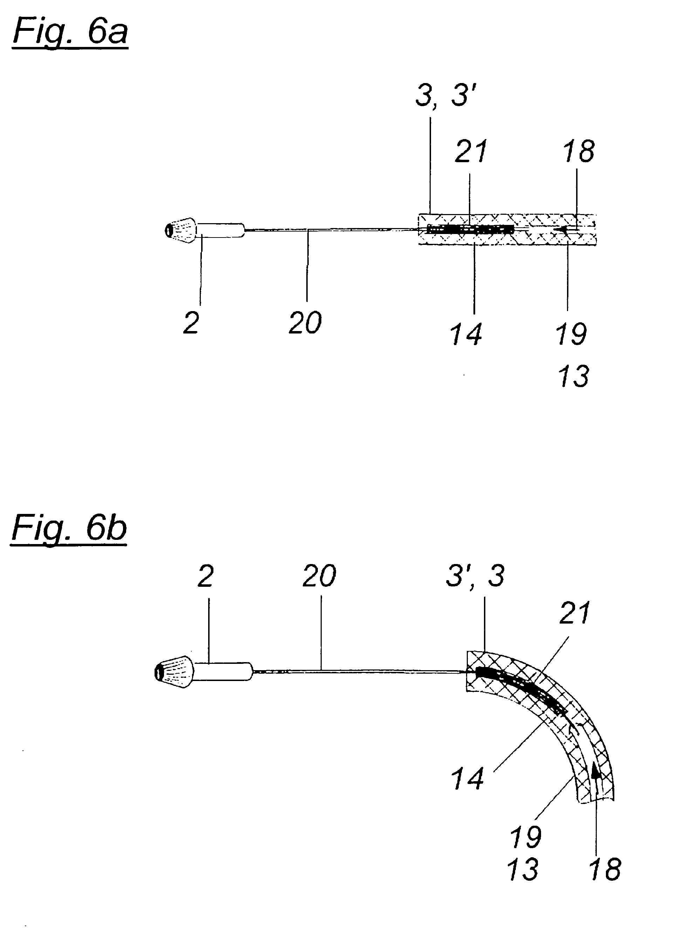

- Fig.6a-g: Querschnitte verschiedener druckdichter Varianten des Verschlusses mit eingeschweißter metallener Ventilverlängerung
- Fig. 6a: einen Querschnitt eines druckdichten Ventil-Endenverschlußes mit einem metallenen Ventil an der Stirnseite und glatter Ausgestaltung der Verschluss-Ober-/ Unterfläche
- Fig. 6b: einen Querschnitt eines druckdichten Endenverschlußes der Fig. 6a unter Biege-Scherspannung an der Ventilverlängerung bei 3 bar Innenüberdruckbelastung.

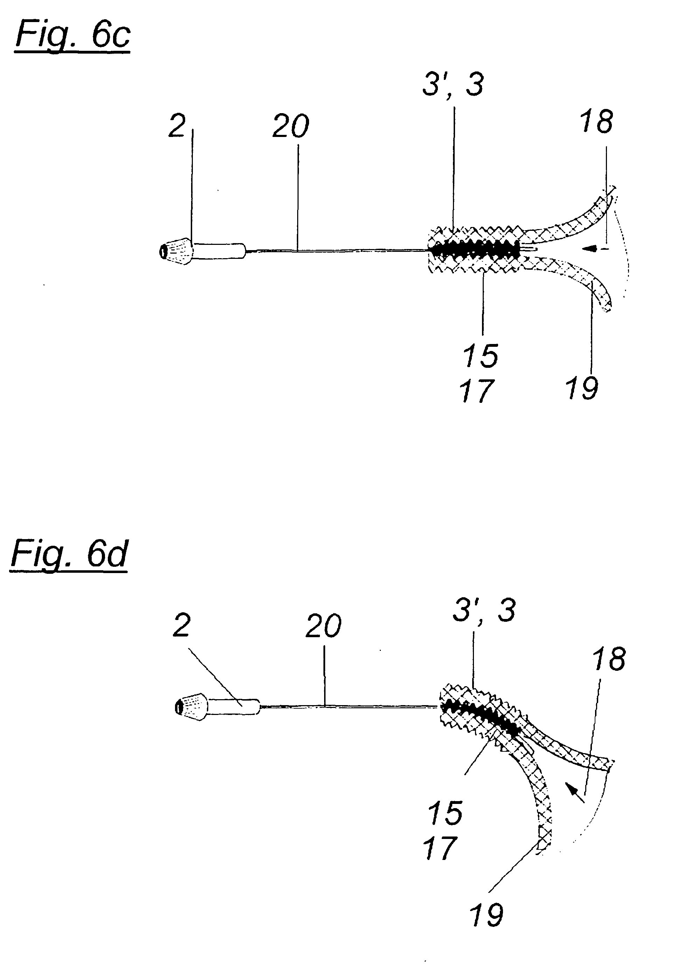

- Fig. 6c: einen Querschnitt eines druckdichten Ventil-Endenverschlußes der Fig. 5a mit erfindungsgemäßer gewellter Ausgestaltung der Verschluss-Ober-/ Unterfläche unter Scherspannung an der Ventilverlängerung bei 3 bar Innenüberdruckbelastung.
- Fig. 6d: einen Querschnitt eines druckdichten Ventil-Endenverschlußes der Fig. 6c mit erfindungsgemäßer gewellter Ausgestaltung der Verschluss-Ober-/ Unterfläche unter Biege-Scherspannung an der Ventilverlängerung bei 3 bar Innenüberdruckbelastung

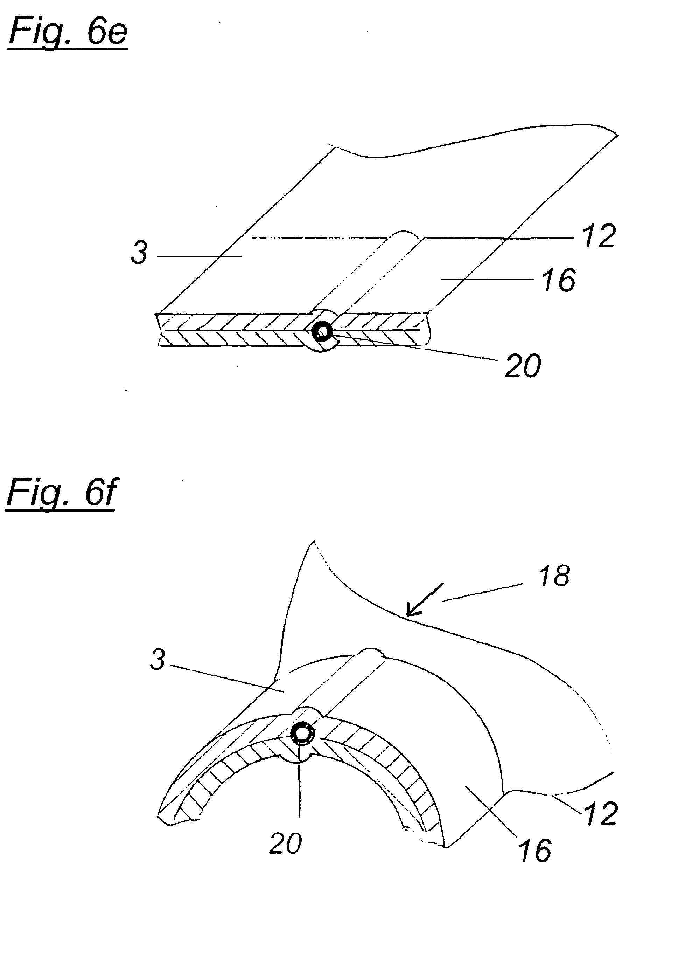

- Fig. 6e: einen Querschnitt durch einen Ventil-Endenverschluß an der Längsseite des Flachschlauchkissens der Fig. 5a
- Fig. 6f: einen Querschnitt des unter Fig. 6e beschriebenen Verschlusses unter Biege-Scherspannung bei 3 bar Innenüberdruckbelastung.

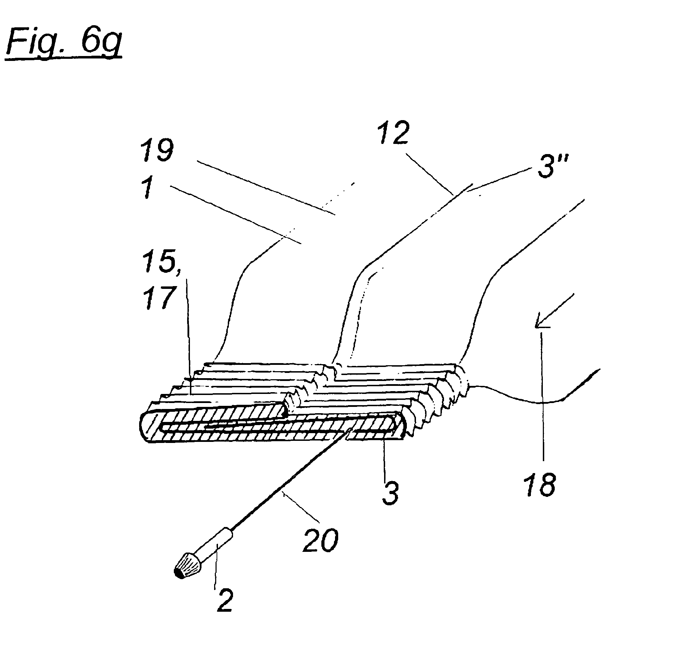

- Fig. 6g: eine perspektivische Ansicht des in Fig. 1 und Fig. 5a beschriebenen Endenverschlußes, der mittels Heizstempel-Schweißverfahren hergestellt wurde und eine erfindungsgemäße gewellte Verschluß Ober- / Unterseite aufweist.

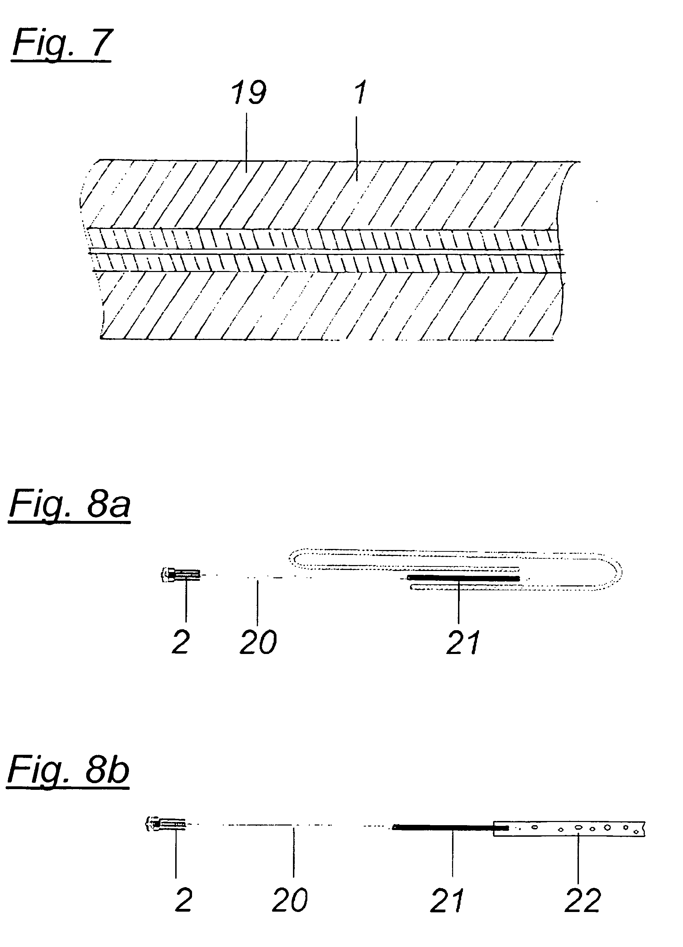

- Fig.7: einen Querschnitt der zur Herstellung des Flachschlauchkissen verwendeten Verbundfolie

- Fig. 8a: eine perspektivische Ansicht des in Fig. 1, 2, 3, 4, 5 und 6 beschriebenen Sonderventils, längs im Flachschlauchkissen eingelegt
- Fig. 8b: eine perspektivische Ansicht des in Fig. 8a beschriebenen Sonderventils, zusätzlich mittels einem druckdichten Schlauchverschluss verbunden mit einem perforierten Kunststoffschlauch

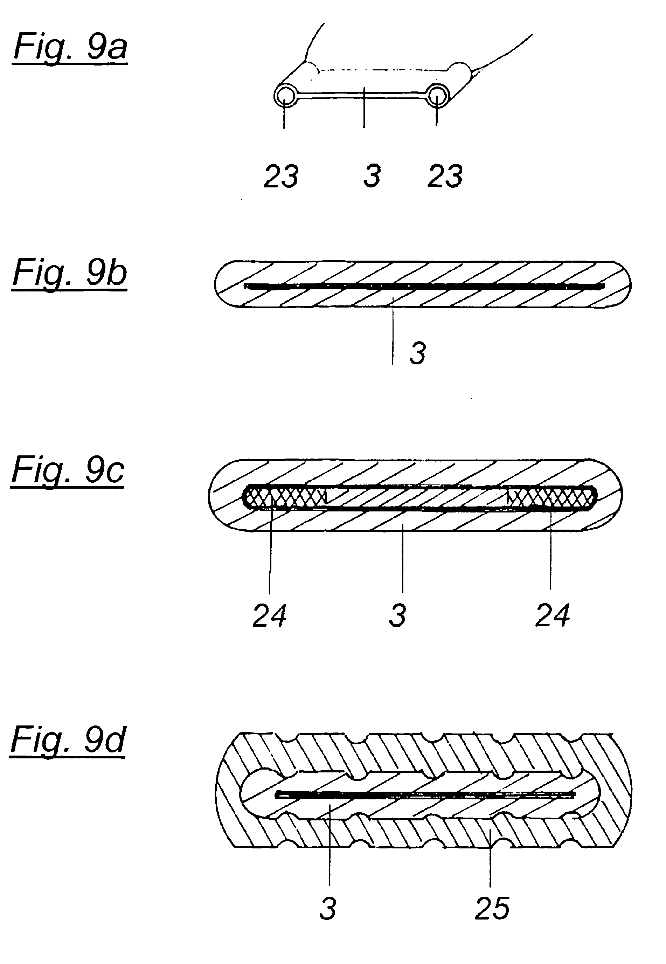

- Fig. 9: Querschnitte des in Fig. 5b beschriebenen Flachschlauchkissens mit unterschiedlichen Ausbildungen der druckdichten Verschlüsse
- Fig. 9a: einen Querschnitt eines druckdichten Verschlusses mit zusätzlichen Rund- und/oder Flachelementen
- Fig. 9b: einen Querschnitt eines druckdichten Verschlusses mit verklebtem, verschweißtem oder vulkanisiertem Ende
- Fig. 9c: einen Querschnitt eines druckdichten Verschlusses mit zusätzlicher Werkstoffeinlage und zusätzlichen Halteösen
- Fig. 9d: einen Querschnitt eines druckdichten Verschlusses der mittels Metallverpressung hergestellt wurde

Die Fig. 1 zeigt die Vorrichtung bestehend aus einem Flachschlauchkissen [1] mit einem Druckluftventil [2] der Fig. 8a oder 8b welches ggf. mit einem perforiertem Kunststoffschlauch [22] verbunden ist, der sich im Inneren des Flachschlauchkissens an der langen oder Stirnseite befindet und zur optimalen Druckverteilung dient. Die Ausbildung als Flachschlauchkissen wird durch Herstellung von druckdichten Verschlüssen [3, 3', 3"] in Längsrichtung [3", 12] und an den beiden Enden der gewellten Verbundfolien-Oberflächen [3, 3', 15, 17] erzielt. Das Flachschlauchkissen [1] besitzt an einer Seite ein Sonderventil bestehend aus Druckluftventil [2] mit metallener Ventilverlängerung [20] die am Ende PE- und /oder Bitumen beschichtet [21] sein kann. Je nach Anwendungsbereich wird das Flachschlauchkissen [1] halb- oder kreisförmig in das Kabelkanalrohr eingelegt, unter zu hebende Gegenstände oder während des Transports oder der Lagerung von Gegenständen horizontal oder vertikal zwischen die zu sichernden Gegenstände gelegt. Durch Befüllen der Vorrichtung über das Druckluftventil [2] mit Luft oder einer Flüssigkeit werden die Hohlräume ausgefüllt. Nach Ablassen des Drucks aus dem Flachschlauchkissen [1] ist eine einfache Demontage möglich und das Flachschlauchkissen [1] kann wieder verwendet werden.

Die Fig. 2 zeigt eine der Fig. 1 ähnliche Vorrichtung, die ein zusätzliches Halteelement oder Öse [4] zum Fixieren aufweist. Alternativ kann mindestens eine Öse in den druckdichten Verschlüssen oder das Druckluftventil [2] an der Längsseite des Flachschlauchkissen angebracht sein.

Die Fig. 3 zeigt eine Vorrichtung der Fig. 1, die in der Länge [5] auf den inneren, vollen oder halben Umfang des Kabelkanalrohres [7] wie in Fig. 4 dargestellt, begrenzt ist und die beispielsweise auf der Ober- [1a] und der Unterseite [1b] mit einem Dichtband [6] vorkonfektioniert sein kann, das längenmässige Überstände [6'] aufweisen kann.

Die Fig. 4a zeigt einen Querschnitt der in Fig. 3 gezeigten vollkreisförmig angeordneten Vorrichtung zur Abdichtung der im Kabelschutzrohr [7] verlegten Kabel oder Kabelkanalrohre [8]. Die Vorrichtung besteht wie in Fig. 3 aus einem vorkonfektionierten Flachschlauchkissen [1] mit einem metallenen Druckluftventil [2], das ggf. mit einer kunststoffbeschichteten Ventilverlängerung [20] versehen ist. Die Enden [3, 3'] des Flachschlauchkissens wurden mittels geeignetem Verfahren zu gewellten Verbundfolienverschlüssen [15, 17] 3 bar innenüberdruck- und scherfest [18] verschlossen. Zum druckgas- und wasserdichten Verschließen eines Kabelkanalrohres oder Kabels [8] wurde ein vorkonfektioniertes, nicht dauerhaft mit den Bauteilen verklebendes Dichtband [6], um die Kabel [10] und um das Flachschlauchkissen [1] gewickelt und/oder aus dem Dichtband [6] ein(e) Füllelement/ Abdichtschnur [11] zum Auffüllen des Zwickels zwischen Kabel [8], Flachschlauchkissen [1] und Kabelkanalrohr [7] geformt. Die 0,5 bar gas- oder wasserdichte Abdichtung des Kabelkanalrohres wird durch Erhöhung des Innendrucks durch Einbringung von Luft oder einer Flüssigkeit über das Druckluftventil [2] und Verpressen des Dichtbands [6] und der Füllelemente [11] in die Zwickel erzielt. Durch anschließende Druckreduzierung befindet sich das Druck-Spannungs-Verformungs-verhältnis des Flachschlauchkissens [1] im elastischen Bereich.

Fig. 4b zeigt einen Querschnitt der Ansicht der Fig. 4a bei dem eine halbe Lage des Flachschlauchkissens [1] kreisförmig um ein Kabel/Rohr [8] mit großem Außendurchmesser in ein Kabelschutzrohr [7] eingelegt ist. Die 0,5 bar druckgas-und wasserdichten Abdichtung des Kabels/ Rohrs [8] im Kabelschutzrohr [7] wird durch Umwicklung des Kabels mit Dichtband [10], Füllelementen [11] und mit Dichtband [6] und der Umlegung mittels Flachschlauchkissens [1] erzielt.

Fig. 5a zeigt eine perspektivische Teilansicht des in Fig. 1 beschriebenen Endes des Flachschlauchkissens [1], hergestellt aus einer überlappend [12] gefalteten Verbundfolie [19]. Das Ende wurde hier im aufgeschnittenen und unverschlossenen Zustand dargestellt, um die Lage des Sonderventils der Fig. 8a, 8b sowie den damit verbundenen perforierten Kunststoffschlauch [22] im Inneren des Flachschlauchkissens / Endenverschlusses zu zeigen.
Die Fig. 5b zeigt eine perspektivische Teilansicht des in Fig. 1 beschriebenen Endes des Flachschlauchkissens [1], hergestellt aus einem Schlauch [13]. Das Ende wurde hier im aufgeschnittenen und unverschlossenen Zustand dargestellt, um die Lage des Sonderventils der Fig. 8a, 8b im Inneren des Flachschlauchkissens/ Endenverschlusses zu zeigen.

Die Figuren 6a-6g zeigen im Querschnitt verschiedene Ausgestaltungen des druckdichten (Enden-) Verschlusses [3,3'] des Flachschlauchkissens [1], hergestellt aus einer Verbundfolie [19] oder einem Schlauch [13] und die im Verschluss eingebrachte, metallene Ventilverlängerung [20] mit Druckluftventil [2].
Fig. 6a zeigt den Querschnitt eines druckdichten Endenverschlußes [3,3'] mit einem metallenen Sonderventil der Fig. 8a an der Stirnseite der Flachschlauchkissen und einer glatten Ausgestaltung des Verschluss-Ober-/ Unterfläche [14]. Der Endenverschluß ist hier im gestreckten Zustand, wie bei der Verwendung als Hebe- und Sicherungselement dargestellt.
Die Fig. 6b zeigt einen Querschnitt eines druckdichten Endverschlusses [3,3'] der Fig. 6a unter Biege-Scherspannung [18] der Kunststoff-Metallverbindung [18] bei 3 bar Innenüberdruckbelastung. Der Endenverschluß ist hier im gebogenen Zustand, wie bei der Verwendung als Abdichtelement in Rohrzügen dargestellt.
Die Fig. 6c zeigt einen Querschnitt eines druckdichten Endverschlusses [3,3'] der Fig. 5a unter Scherspannung [18] bei 3 bar Innenüberdruckbelastung.

Druckdichter Endverschluss mit einem metallenen Sonderventil der Fig. 8a, 8b und gewellter Ausgestaltung der Verschluß-Ober-/ Unterfläche [15, 17]. Der Endenverschluß ist hier im gestreckten Zustand, wie bei der Verwendung als Hebe- und Sicherungselement dargestellt.
Die Fig. 6d zeigt einen Querschnitt eines druckdichten Endverschlusses [3,3'] der Fig. 6c unter Biege-Scherspannung [18] der Kunststoff-Metallverbindung bei 3 bar Innenüberdruckbelastung. Druckdichter Endverschluss mit einem metallenen Sonderventil der Fig. 8a, 8b an der Stirnseite des Flachschlauchkissens und gewellter Ausgestaltung der Verschluß-Ober-/ Unterfläche [17]. Der Endenverschluß ist hier im gebogenen Zustand, wie bei der Verwendung als Abdichtelement in Rohrzügen dargestellt.
Die Fig. 6e zeigt einen Querschnitt durch einen Verschluß [3"] der an der Längsseite [12, 16] des Flachschlauchkissens [1] der Fig. 5a hergestellt wurde.
Druckdichter Endverschluss mit einer metallenen Ventilverlängerung [20] und glatter Ausgestaltung der Verschluß-Ober-/ Unterfläche [16].

Die Fig. 6f zeigt einen Querschnitt durch den unter Fig. 6e beschriebenen Verschluß unter Biege-Scherspannung [18] der Kunststoff-Metallverbindung bei 3 bar Innenüberdruckbelastung.

Fig. 6g zeigt eine perspektivische Ansicht des in Fig. 1 und Fig. 5a beschriebenen Flachschlauchkissen [1] gebildet aus Verbundfolie [19], druckdichten Verschlüssen an den Enden [3] und in der Überlappung in Längsrichtung [3", 12]. Der mittels Heizstempel-Schweißverfahren hergestellte Endenverschluß [3, 3'] weist eine gewellte [17] Ausgestaltung nach Fig. 6d mit einer Metallverbundfläche von 126 bis 200 mm² auf, beherbergt ein eingelegtes Sonderventil der Fig. 8a und hält einer Biege-Scherspannung [18] der Kunststoff-Metallverbindung bei 3 bar Innenüberdruckbelastung stand.

Fig. 7 zeigt einen Querschnitt einer Verbundfolie [19] aus welcher die in Fig. 1, 2, 3, 4, 5 und 6 beschriebenen Flachschlauchkissen [1] hergestellt wurden

Fig. 8a zeigt eine perspektivische Ansicht des in Fig. 1, 2, 3, 4, 5 und 6 beschriebenen Sonderventils, bestehend aus einem Druckluftventil [2] mit metallener Ventilverlängerung [20] und einem mit PE- und/oder Bitumengemischbeschichtetem Ende [21].
Die Fig. 8b zeigt das unter Fig. 8a beschriebene Sonderventil verbunden mit einem flexiblen, perforierten Kunststoffschlauch [22] zur gleichmäßigen Druckverteilung.

Die Figuren 9a bis 9d zeigen verschiedene Ausgestaltungen zur Erzielung eines druckdichten Verschlusses an den Enden [3, 3'] der in den Fig. 1 bis 5b beschriebenen Flachschlauchkissen [1]

Fig. 9 a zeigt einen Querschnitt durch einen druckdichten Verschluss [3], der an beiden Seiten Rund- und/oder Flachelemente [23], aus einem dem Flachschlauchkissen [1] ähnlichen Werkstoff oder ein beschichtetes Druckluftventil enthält.

Fig. 9b zeigt einen Querschnitt durch einen druckdichten Verschluss [3], der mit einer zusätzlichen Gewebeeinlage und/oder durch Vernähen, Verkleben, Verschweißen oder Vulkanisieren unter Druck hergestellt wurde.

Fig. 9c zeigt einen Querschnitt durch einen druckfesten Verschluss [3], in dem zusätzliche Werkstoffe [24] nach Fig. 9a und eine Halte- oder Fixierungsöse [4] eingebracht sind.

Fig. 9d zeigt einen Querschnitt durch einen druckdichten Verschluss [3], der zusätzlich oder für sich alleine durch einen Metallverpressung [25] druckdicht verschlossen ist.

## Patentansprüche

1. Wiedeverwendbane Vorrichtung zum Abdichten von Zwischenräumen oder von mit Kabeln belegten Kabelkanalrohren, zum Heben von Gegenständen oder zum Sichern von Gütem während des Transports oder der Lagerung, wobei die Vorrichtung aus einem mit einem Druckluftventil (2, 20 bis 22) versehenen und für den Anwendungszweck abgelängten (5) Flachschlauchkissen (1) besteht, das an seiner Längsseite (12) und an seinen Stirnseiten einen druckfesten Verschluss (3, 3', 3") aufweist,
**dadurch gekennzeichnet,**
**dass** der druckfeste Verschluss an den Schlauchstimseiten (3, 3") eine durchgängig gewellte Ober- und UntertTäche (15, 17) und an der Schlauchlängsseite (3",12) eine glatte Oberfläche aufweist und dass das Druckluftventil (2) entsprechend dem Anwendungsbereich an der Stirn- oder an der Längsseite des Flachschlauchkissens (1) angeordnet und als Pkw- bzw. Motorrad-Druckluftventil (2) oder als Sonderventil (20 bis 22) ausgebildet ist.

2. Vorrichtung nach Anspruch 1,
**dadurch gekennzeichnet,**
**dass** das Sonderventil, bestehend aus einem metallenen Druckluftventil (2) mit einer metallenen Ventilverlängerung (20) im Bereich des druckfesten Verschlusses (3) mit einem dem Schlauchkissen gleichen und/oder ähnlichen Werkstoff, vorzugsweise Polyethylen, Polyuretan und/oder einer Elastomer-Bitumen-Beschichtung (21) versehen ist und je nach Anwendungsbereich mit einem sich im Inneren des Flachschlauchkissens befindlichen, perforierten Kunststoffschlauch (22) verbunden ist.

3. Vorrichtung nach Anspruch 2,
**dadurch gekennzeichnet,**
**dass** das Flachschlauchkissen (1) im Anwendungsbereich als Einzelelement horizontal, vertikal, voll- oder halbkreisförmig im Rohrumfang angeordnet ist, wobei sich das Druckluftventil (2) an einem Ende (3) des Flachschlauchkissens (1) befindet und durch die metallene Ventilverlängerung (20) ein in alle Richtungen biegsames Sonderventil (2) hergestellt werden kann.

4. Vorrichtung nach den Ansprüchen 1 bis 3,
**dadurch gekennzeichnet,**
**dass** sie in Längs- oder Querrichtung zusätzlich ein elastisches, nicht dauerhaft verklebendes Dichtband (6) aufweist.

5. Vorrichtung nach einem der Ansprüche 1 und 4,
**dadurch gekennzeichnet,**
**dass** beim Abdichten von mit Kabeln (8) und/oder Kabelrohren (8) durchzogenen Kabelkanalrohren (7) im Bereich der Berührungsstellen (9) von Kabelrohren (8) und/oder Kabelkanalrohren (7) eine Umwicklung (10) aus einem Dichtband mit bzw. ohne Trennfolie eingesetzt ist und sich im Zwickel Füllelemente oder Abdichtschnüre (11) befinden, die aus Dichtbandmaterial hergestellt sind.

6. Vorrichtung nach Anspruch 5,
**dadurch gekennzeichnet,**
**dass** die Dichtband-Umwicklung (10) in Sandwichbauweise aus einem im Zentrum liegendem dauerplastischen, mit Füllstoffen und Polymeren oder Quarzsand modifizierten Vaseline-Petrolat-Gemisch und einer seitlichen Begrenzung aus imprägnierten Gewebebändern oder Moosgummi besteht.

7. Vorrichtung nach den Ansprüchen 4, 5 und 6,
**dadurch gekennzeichnet,**
**dass** zum Abdichten unter Druck das Dichtband (6), die Füllelemente bzw. Abdichtschnüre (11) und/oder die Dichtband-Umwicklung (10) aus einem dauerplastischen, mit Füllstoffen und Polymeren oder Quarzsand modifizierten Vaseline-Petrolat-Gemisch mit imprägnierten Gewebebändem (10) bestehen, die eine Dicke von etwa 1,0 bis 3mm bzw. bei Füllelementen (11) einen Durchmesser zwischen 15 und 30mm aufweisen.

8. Vorrichtung nach Anspruch 7,
**dadurch gekennzeichnet,**
**dass** die Abdichtbänder (6, 10) und Abdichtschnüre (11) einseitig mit einer weichen, dehnbaren Trennfolie umhüllt sind.

9. Vorrichtung nach einem der Ansprüche 4 bis 8,
**dadurch gekennzeichnet,**
**dass** die Abdichtbänder im Ganzen bei der Ausführung in Sandwichbauweise (6, 10) an den seitlichen Begrenzungen oder die Füllelemente (11) aus einem in Längs- und Querrichtung dehnbaren Werkstoff, wie Baumwolle, Hanf, PP, Polyesterfilamenten oder ähnlichen Werkstoffen bestehen, mit einem mit Füllstoffen und Polymeren oder Quarzsand modifizierten Vaseline-Petrolat-Gemisch oder einem gleichwertigen Werkstoff gefüllt sind und durch Ein- oder Umlegen in die Hohlräume zwischen Kabel (8) und Kabelkanal (7) und/oder unter Beaufschlagung mit einem Druck von weniger als 3bar die Hohlräume und Zwickel druckgasdicht ausfüllen und bei der Demontage leicht wieder entfernbar sind.

10. Vorrichtung nach einem der Ansprüche 1 und 3,
**dadurch gekennzeichnet,**
**dass** das Flachschlauchkissen (1) aus einem gefalteten Band (12) oder Schlauch (13) hergestellt wurde, das bzw. der je nach dem Anwendungsbereich aus Thermoplast, Elastomeren und/oder Thermoplast-Elastomer-Gemischen besteht, wobei diese Stoffe metallene und/oder metallfreie, reißfeste Einlagen aufweisen.

11. Vorrichtung nach einem der Ansprüche 1, 3 oder 10,
**dadurch gekennzeichnet,**
**dass** das Flachschlauchkissen (1, 12) vorzugsweise aus einer Thermoplast-Verbundfolie (19) mit dem Aufbau
150-250 µm PE,
50-75 µm PET,
9 µm ALU,
50-75 µm PET und
150-250 µm PE
hergestellt wird.

12. Vorrichtung nach einem der Ansprüche 1, 3, 9 bis 11,
**dadurch gekennzeichnet,**
**dass** die druckdichten Verschlüsse (3) der Vorrichtung durch thermisches Verschweißen (15, 17), Verkleben oder Vulkanisieren unter Druck oder unter Metallverpressung (25) hergestellt werden.

13. Vorrichtung nach Anspruch 12,
**dadurch gekennzeichnet**
**dass** das Flachschlauchkissen (1) bei der Verwendung als Sicherungselement an einem der Verschlüsse mindestens eine Öse (4) zur Befestigung aufweist.

## Claims

1. Reusable device for sealing intermediate spaces or cable conduit ducts occupied by cables, for lifting objects or for securing articles during transport or storage, wherein the device comprises a flat sleeve pad (1) that is provided with a compressed air valve (2, 20 to 22) and is cut to length (5) for the purposes of the application, the said flat sleeve pad including a pressure-resistant closure (3, 3', 3") on its longitudinal side (12) and on its end faces, **characterised in that** at the sleeve end faces (3, 3") the pressure-proof closure has a continuously wavy top and bottom surface (15, 17) and at the sleeve longitudinal side (3", 12) a smooth surface and **in that** the compressed air valve (2) is disposed, corresponding to the area of application, at the end face or at the longitudinal side of the flat sleeve pad (1) and is in the form of an automobile or respectively motorcycle compressed air valve (2) or a special valve (20 to 22).

2. Device according to claim 1, **characterised in that** the special valve, comprising a metal compressed air valve (2) with a metal valve extension (20) is provided in the region of the pressure-resistant closure (3) with a material that is identical and/or similar to the sleeve pad, preferably polyethylene, polyurethane, and/or an elastomer bitumen coating (21) and, depending on the area of application, is connected to a perforated plastics material sleeve (22) that is situated in the interior of the flat sleeve pad.

3. Device according to claim 2, **characterised in that** the flat sleeve pad (1), in the area of application as an individual element, is disposed horizontally, vertically, in the form of a circle or a semicircle in the conduit circumference, wherein the compressed air valve (2) is situated at one end (3) of the flat sleeve pad (1) and by means of the metal valve extension (20), a special valve (2) that is flexible in all directions can be produced.

4. Device according to claims 1 to 3, **characterised in that** the said device additionally includes a resilient, non permanently adhesive sealing tape (6) in the longitudinal or transverse direction.

5. Device according to one of claims 1 and 4, **characterised in that** when sealing cable conduit ducts (7) pulled through by cables (8) and/or cable conduits (8), a wrapping (10) made of a sealing tape with or respectively without separating foil is inserted in the region of the contact points (9) of cable conduits (8) and/or cable conduit ducts (7) and filler elements or sealing cords (11) produced from sealing tape material are situated in the spaces in the conduit.

6. Device according to claim 5, **characterised in that** the sealing tape wrapping (10) comprises, in a sandwich-type construction, a duroplastics Vaseline petrolatum mixture, located in the centre and modified with fillers and polymers or silica sand and a lateral boundary of impregnated woven fabric tapes or cellular rubber.

7. Device according to claims 4, 5 and 6, **characterised in that** for sealing under pressure the sealing tape (6), the filler elements or respectively sealing cords (11) and/or the sealing tape wrapping (10) are produced from a duroplastics Vaseline petrolatum mixture modified with fillers and polymers or silica sand with impregnated woven fabric tapes (10), which are approximately 1.0 to 3 mm thick or respectively in the case of fillers have a diameter of between 15 and 30 mm.

8. Device according to claim 7, **characterised in that** the sealing tapes (6, 10) and sealing cords (11) are enveloped on one side by a soft, extensible separating foil.

9. Device according to one of claims 4 to 8, **characterised in that** the sealing tapes are produced entirely in the embodiment in sandwich-type construction (6, 10) at the lateral boundaries or the filler elements (11) from a material that is extensible in the longitudinal or transverse direction, such as cotton, hemp, PP, polyester filaments or similar materials, are filled with a Vaseline petrolatum mixture modified with fillers and polymers or silica sand or an equivalent material and, by being inserted or folded over into the hollow spaces between cable (8) and cable duct (7) and/or when impinged upon by a pressure of less that 3 bar, fill out the hollow spaces and spaces in the conduit in a pressure gas-proof manner and are easily removable again for disassembly.

10. Device according to one of claims 1 and 3, **characterised in that** the flat sleeve pad (1) has been produced from a folded tape (12) or sleeve (13), which, depending on the area of application, is produced from thermoplastics, elastomers and/or thermoplastics elastomer mixtures, wherein the said materials have metal and/or metal-free, tear-resistant inserts.

11. Device according to one of claims 1, 3 or 10, **characterised in that** the flat sleeve pad (1, 12) is produced preferably from a thermoplastics composite foil (19) with the composition 150-250 µm PE, 50-75 µm PET, 9 µm ALU, 50-75 µm PET and 150-250 µm PE.

12. Device according to one of claims 1, 3, 9 to 11, **characterised in that** the pressure-resistant closures (3) of the device are produced by means of thermal welding (15, 17), bonding or vulcanising under pressure or under metal extrusion (25).

13. Device according to claim 12, **characterised in that** the flat sleeve pad (1) when used as a securing element, includes at least one lug (4) for securing purposes at one of the closures.

## Revendications

1. Dispositif pour rendre étanches des espaces intermédiaires ou des tuyaux de canalisation de câble occupés par des câbles, pour lever des objets ou pour arrimer des produits pendant le transport ou le stockage, le dispositif étant constitué d'un coussin ( 1 ) plat en tube souple, muni d'une soupape ( 2, 20 à 22 ) d'air comprimé, mis à longueur ( 5 ) pour l'application visée, ayant une fermeture ( 3, 3', 3" ) résistant à la pression sur son grand côté ( 12 ) et sur ses côtés frontaux,
**caractérisé**
**en ce que** la fermeture qui résiste à la pression sur les côtés ( 3, 3" ) frontaux du tube souple a une surface ( 15 ) supérieure et une surface ( 17 ) inférieure ondulées de façon continue et sur le grand côté ( 3", 12 ) du tube souple, une surface lisse, et en ce que la soupape ( 2 ) d'air comprimé est disposée, en fonction du domaine d'utilisation, sur le côté frontal ou sur le grand côté du coussin ( 1 ) plat en tube souple et est constituée sous la forme d'une soupape ( 2 ) d'air comprimé d'automobile ou de motocyclette ou sous la forme d'une soupape ( 20 à 22 ) spéciale.

2. Dispositif suivant la revendication 1,
**caractérisé**
**en ce que** la soupape spéciale, constituée d'une soupape ( 2 ) métallique d'air comprimé est munie dans la zone de la fermeture ( 3 ) qui résiste à la pression d'un prolongement ( 20 ) métallique de soupape ayant un revêtement ( 21 ) en un matériau identique et/ou analogue à celui du coussin en tube souple, de préférence en polyéthylène, en polyuréthane et/ou en un élastomère-bitume, et est reliée, suivant le domaine d'application, à un tube ( 22 ) souple, en matière plastique, perforé et se trouvant à l'intérieur du coussin plat en tube souple.

3. Dispositif suivant la revendication 2,
**caractérisé**
**en ce que** le coussin ( 1 ) plat en tube souple est disposé, suivant le domaine d'application, sous la forme d'un élément unique, horizontalement, verticalement, en demi-cercle ou en un cercle complet, dans le pourtour du tuyau, la soupape ( 2 ) à air comprimé se trouvant à une extrémité ( 3 ) du coussin ( 1 ) plat en tube souple et une soupape ( 2 ) particulière et souple dans toutes les direction, peut être menacée par le prolongement ( 20 ) métallique de soupape.

4. Dispositif suivant l'une des revendications 1 à 3,
**caractérisé**
**en ce qu'**il a, dans la direction longitudinale ou transversale, supplémentairement un ruban ( 6 ) d'étanchéité élastique et ne collant pas de manière permanente.

5. Dispositif suivant l'une des revendications 1 et 4,
**caractérisé**
**en ce que**, pour rendre étanches des tuyaux ( 7 ) de canalisation de câbles, dans lesquels passent des câbles ( 8 ) et/ou des tuyaux ( 8 ) de câble, il est inséré, dans la partie des points ( 9 ) de contact de tuyaux ( 8 ) de câbles et/ou de tuyaux ( 7 ) de canalisation de câble, un enroulement ( 10 ) en un ruban d'étanchéité avec ou sans feuille de séparation et des éléments de remplissage ou des cordons ( 11 ) d'étanchéité, qui sont en un matériau pour rubans d'étanchéité et qui se trouvent dans le gousset.

6. Dispositif suivant la revendication 5,
**caractérisé**
**en ce que** l'enroulement ( 10 ) de ruban d'étanchéité est constitué en sandwich d'un mélange de vaseline et de vaseline-petrolatum se trouvant au centre, à plasticité permanente, modifié par de charges et des polymères ou du sable quartzeux et d'une délimitation latérale en ruban tissé imprégné ou en caoutchouc mousse.

7. Dispositif suivant les revendications 4, 5 et 6,
**caractérisé**
**en ce que** pour rendre étanche sous pression de le ruban ( 6 ) d'étanchéité, les éléments de remplissage ou les cordons ( 11 ) d'étanchéité et/ou l'enroulement ( 10 ) de ruban d'étanchéité sont constitués d'un mélange de vaseline et de petrolatum, à plasticité permanente et modifié par des charges et des polymères ou du sable quartzeux, avec des rubans ( 10 ) tissés imprégnés qui ont une épaisseur d'environ 1,0 à 33 mm
ou, pour des élément ( 11 ) de remplissage, un diamètre compris entre 15 et 30 mm.

8. Dispositif suivant la revendication 7,
**caractérisé**
**en ce que** les rubans ( 6, 10 ) d'étanchéité et les cordons ( 11 ) d'étanchéité sont entourés sur une face d'une feuille de séparation souple et pouvant s'étirer.

9. Dispositif suivant l'une des revendications 4 à 8,
**caractérisé**
**en ce que** les rubans d'étanchéité sont constitués en entier, lors de la réalisation en sandwich ( 6, 10 ) sur les délimitations latérales ou les éléments ( 11 ) de remplissage, en un matériau pouvant s'étirer dans la direction longitudinale et transversale, comme du coton, du chanvre, du PP, des filaments de polyester ou des matériaux analogues, sont garnis d'un mélange de vaseline-petrolatum modifié par des charges et des polymères ou du sable quartzeux ou d'un matériau équivalent et les espaces creux et le gousset sont remplis d'une manière étanche au gaz comprimé en les insérant dans les cavités entre le câble ( 8 ) et la canalisation ( 7 ) de câbles et autour de celle-ci et/ou en y appliquant une pression de moins de 3 bars et peuvent être facilement retirés au démontage.

10. Dispositif suivant l'une des revendications 1 et 3,
**caractérisé**
**en ce que** le coussin ( 1 ) plat en tube souple a été fabriqué en un ruban ( 12 ) plié ou en un tube ( 13 ) souple qui, suivant le domaine d'application, est en une matière thermoplastique, en des élastomères et/ou en des mélanges de matières thermoplastiques et d'élastomères, ces substances ayant des inserts métalliques et/ou sans métal, qui résistent à la rupture.

11. Dispositif suivant l'une des revendications 1, 3 ou 10,
**caractérisé**
**en ce que** le coussin ( 1, 2 ) en tube souple est, de préférence, en une feuille ( 19 ) composite en matière thermoplastique ayant la structure
150 à 250 µm de PE,
50 à 75 µm de PET,
9 µm d'ALU,
50 à 75 µm de PET et
150 à 250 µm de PE.

12. Dispositif suivant l'une des revendications 1, 3, 9 à 11,
**caractérisé**
**en ce que** les fermetures ( 3 ) étanches à la pression du dispositif sont fabriquées par soudage ( 15, 17 ) thermique, par collage ou par vulcanisation sous pression ou sous compression ( 25 ) par un métal.

13. Dispositif suivant la revendication 12,
**caractérisé**
**en ce que** le coussin ( 1 ) plat en tube souple a, lors de l'utilisation en tant qu'élément d'arrimage pour la fixation, au moins un oeillet ( 4 ) sur l'une des fermetures.
